# EUROPEAN PATENT APPLICATION

(11) **EP 3 988 355 A1**
(43) Date of publication of application: **27.04.2022**
(21) Application number: 20856463.3
(22) Date of filing: 24.08.2020
(51) Int. Cl.: B60J 1/00, B32B 27/18, C09J 9/00, B60S 1/02, C03C 27/12

(54) **ANTI-FOGGING STRUCTURE FOR WINDOW GLASS**

(30) Priority: 30.08.2019 JP 2019158890
(71) Applicant: Central Glass Company, Limited, Ube-shi, Yamaguchi 755-0001 (JP)
(72) Inventor: KUBOTA, Sho, Matsusaka-shi, Mie 515-0001 (JP); TAKANOBU, Naofumi, Matsusaka-shi, Mie 515-0001 (JP); ASADA, Takahiro, Matsusaka-shi, Mie 515-0001 (JP); KANEDA, Takeyuki, Matsusaka-shi, Mie 515-0001 (JP)
(74) Representative: Mewburn Ellis LLP
(86) International application number: PCT/JP2020/031807
(87) International publication number: WO 2021/039707

(57) **Abstract**

A defogging structure of a windowpane of a movable body in which an information acquisition device configured to acquire information from an exterior of the movable body by at least one of emitting light or receiving light can be arranged in an interior of the movable body, the defogging structure including: a windowpane having an information acquisition area through which at least one of light emitted by the information acquisition device or light to be received by the information acquisition device passes; a defogging sheet including a resin film and a defogger, the defogging sheet being adhered to the information acquisition area of the windowpane; and a transparent resin adhesive layer that allows the resin film of the defogging sheet to be adhered to the windowpane, wherein a resin constituting the transparent resin adhesive layer has a Tg of -20°C to -50°C, and a shear storage modulus of 0.5 × 10⁵ Pa to 2.0 × 10³ Pa.

## Description

### TECHNICAL FIELD

The disclosure relates to a defogging structure of a windowpane.

### BACKGROUND ART

While research and development on autonomous driving technology for automobiles has progressed in recent years, it is essential to understand the situation surrounding the vehicle based on images captured by a camera arranged inside the automobile.

The camera arranged inside the automobile captures images through the windowpane of the automobile. Fog formation on the windowpane of the automobile interferes with capturing images necessary to understand the surrounding situation. Thus, prevention of fog on the windowpane in front of the camera is required.

Known techniques to prevent fog on the windowpane in front of the camera include one disclosed in Patent Literature 1.

Patent Literature 1 discloses providing a heating means that heats a windowpane, at a joint portion where a bracket that supports a camera body is joined with the windowpane. The heating means is provided around an opening corresponding to a shooting range of the camera body. An ohmic heating coil is described as the heating means.

### CITATION LIST

### Patent Literature

Patent Literature 1: JP 2017-206080 A

### SUMMARY OF INVENTION

### - Technical Problem

According to the technique of Patent Literature 1, the heating means is provided around the opening corresponding to the shooting range of the camera body. In this case, it takes time for heat to be transferred from the heating means to the entire opening after passage of an electric current through the heating means in response to fog formation. Disadvantageously, this results in insufficient responsiveness to fog formation.

Thus, the present inventors conducted studies to increase the responsiveness to fog formation. Instead of providing the heating means around the opening corresponding to the shooting range of the camera body (hereinafter, such an opening is also referred to as an "information acquisition area"), the present inventors provided a defogging structure on the entire information acquisition area.

In the study, the present inventors prepared a defogging sheet having a defogger and attached the defogging sheet to the information acquisition area of a common windowpane so as to prevent fog on the windowpane.

First, a sheet including a resin film and a resistive metal layer on the resin film was prepared as a defogging sheet. This defogging sheet is configured such that the entire resistive metal layer quickly generates heat at the surface upon passage of an electric current therethrough. Thus, attaching the defogging sheet to the information acquisition area and passing an electric current result in sufficiently high responsiveness to fog formation.

When attaching the defogging sheet, it is required that the windowpane transparency is not impaired by attachment of the defogging sheet.

In order to ensure the windowpane transparency, the present inventors studied use of a cycloolefin polymer (COP) that is used for interlayers for laminated glass as an adhesive for attaching the defogging sheet.

As a result of repeated studies, the present inventors completed attaching without impairing the transparency at first glance by making the thickness of the COP much smaller than the thickness typical for interlayers for laminated glass, and achieved a defogging structure of a windowpane.

However, although the thus-obtained defogging structure of a windowpane looks transparent when observed from the front, streaks are visible when the angle of the windowpane is tilted with respect to the line of sight.

When such a structure is used for the vehicle type in which the windshield is arranged tilted with respect to the line of sight of a vehicle occupant (typically, a sports car), the windowpane has insufficient transparency. Thus, further improvement has been required.

In view of the above, the disclosure aims to provide a defogging structure of a windowpane, which has high responsiveness to fog formation and provides excellent transparency in the information acquisition area.

### - Solution to Problem

The present inventors further studied factors that cause insufficient windowpane transparency when the COP is used.

The COP is an adhesive used as an interlayer for laminated glass. Usually, production of laminated glass involves autoclaving, and the COP is designed to effect its adhesive strength when heated by autoclaving.

As a result of further studies, the present inventors found that heating the COP to effect its adhesive strength causes wrinkle formation in a resin film (e.g., a PET film) constituting a defogging sheet to be attached to a windowpane with the COP.

Thus, the present inventors considered that the defogging sheet needed to be adhered without heating, and extensively studied adhesives other than the COP. They used a transparent resin adhesive layer containing a resin having a specific Tg and a specific shear storage modulus to allow the defogging sheet to be adhered at room temperature. This resulted in a defogging structure of a windowpane, which provides excellent transparency in the information acquisition area. The disclosure was thus accomplished.

Specifically, the defogging structure of a windowpane of the disclosure is a defogging structure of a windowpane of a movable body in which an information acquisition device configured to acquire information an exterior of the movable body by at least one of emitting light or receiving light can be arranged in an interior of the movable body, the defogging structure including:
a windowpane having an information acquisition area through which at least one of light emitted by the information acquisition device or light to be received by the information acquisition device passes;
a defogging sheet including a resin film and a defogger, the defogging sheet being adhered to the information acquisition area of the windowpane; and
a transparent resin adhesive layer that allows the resin film of the defogging sheet to be adhered to the windowpane,
wherein a resin constituting the transparent resin adhesive layer has a Tg of -20°C to -50°C, and a shear storage modulus of 0.5 × 10⁵ Pa to 2.0 × 10⁵ Pa.

In the defogging structure of a windowpane of the disclosure, the defogging sheet is adhered to the windowpane by the transparent resin adhesive layer containing a resin having a Tg of -20°C to -50°C and a shear storage modulus of 0.5 × 10⁵ Pa to 2.0 × 10⁵ Pa.

The transparent resin adhesive layer allows adhesion at room temperature. Adhesion at room temperature can prevent wrinkle formation in the resin film constituting the defogging sheet. Thus, it is possible to provide a defogging structure of a windowpane, which provides excellent transparency in the information acquisition area.

Preferably, in the defogging structure of the disclosure, the windowpane includes an interlayer, a first glass plate to be arranged facing the exterior of the movable body, and a second glass plate to be arranged facing the interior of the movable body, the first glass plate and the second glass plate being opposite to each other with the interlayer therebetween,
the first glass plate includes a first main surface to be exposed to the exterior and a second main surface on a side opposite to the first main surface,
the second glass plate includes a fourth main surface to be exposed to the interior and a third main surface on a side opposite to the fourth main surface, and
the defogging structure is a structure including the defogging sheet adhered to the fourth main surface of the second glass plate via the transparent resin adhesive layer.

A windowpane surface on which fog forms is typically the fourth main surface of the second glass plate. Thus, providing a defogging structure on the fourth main surface of the second glass plate can enhance the responsiveness to fog formation.

Preferably, the defogging structure of the disclosure includes a black ceramic layer around the information acquisition area, the transparent resin adhesive layer is provided across a boundary between the information acquisition area and the black ceramic layer, and the transparent resin adhesive layer has a thickness of 100 µm or more.

The black ceramic layer provided around the information acquisition area results in a step corresponding to the thickness of the black ceramic layer. When providing the defogging sheet on the entire information acquisition area surrounded by the black ceramic layer, it is required that the transparent resin adhesive layer is provided across a boundary between the information acquisition area and the black ceramic layer. Here, when the transparent resin adhesive layer has a thickness of 100 µm or more, the step due to the thickness of the black ceramic layer has less impact, thus improving adhesion of the defogging sheet to the information acquisition area.

Preferably, at the boundary between the information acquisition area and the black ceramic layer in the defogging structure of the disclosure, no air is present between the transparent resin adhesive layer, the windowpane, and the black ceramic layer.

In the defogging structure of the disclosure, preferably, the resin film has a Tg of 50°C to 150°C and a tension modulus of 2.0 × 10⁹ Pa to 5.0 × 10⁹ Pa.

When the resin film has a Tg of 50°C to 150°C, its heat resistance is not so high. However, even when such a resin film having not so high heat resistance is used, wrinkle formation in the resin film is prevented because the defogging sheet can be adhered at room temperature without much heating the defogging sheet (or not heating at all in some cases), owing to the use of the specific transparent resin adhesive layer included in the defogging structure of the disclosure.

When the resin film has a tension modulus of 2.0 × 10⁹ Pa to 5.0 × 10⁹ Pa, the resin film is prevented from becoming too hard and can easily conform to the shape of the curved glass surface.

In the defogging structure of the disclosure, preferably, the resin film has a thickness of 50 to 150 µm.

When the resin film has a thickness in the above range in combination with the tension modulus described above, the resin film has low stiffness. Thus, the resin film is less likely to be wrinkled.

Preferably, in the defogging structure of the disclosure, the defogging sheet is a structure including a resistive metal layer on the resin film, and the defogging sheet prevents fog on the windowpane as the resistive metal layer generates heat upon passage of an electric current therethrough.

Preferably, the defogging sheet is a structure including a silver layer on an entire surface of a PET film.

Use of such a defogging sheet can prevent fog on the windowpane in the information acquisition area by heat generation.

Preferably, in the defogging structure of the disclosure, the defogging sheet is a structure including a water absorption layer on the resin film, and the defogging sheet prevents fog on the windowpane as the water absorption layer absorbs moisture that causes fog.

Use of such a defogging sheet can prevent fog on the windowpane in the information acquisition area by moisture absorption.

### - Advantageous Effects of Invention

The disclosure can provide a defogging structure of a windowpane, which has high responsiveness to fog formation and provides excellent transparency in the information acquisition area.

### BRIEF DESCRIPTION OF DRAWINGS

Fig. 1 is a schematic view of an example of a windowpane of a movable body in which an information acquisition device can be arranged in an interior of the movable body.
Fig. 2 is a schematic view of an example of a defogging structure of a windowpane of the disclosure, which includes a defogging sheet in an information acquisition area of the windowpane shown in Fig. 1.
Fig. 3 is a cross-sectional view of the defogging structure of a windowpane shown in Fig. 2.

### DESCRIPTION OF EMBODIMENTS

The following describes the defogging structure of a windowpane of the disclosure with reference to the drawings.

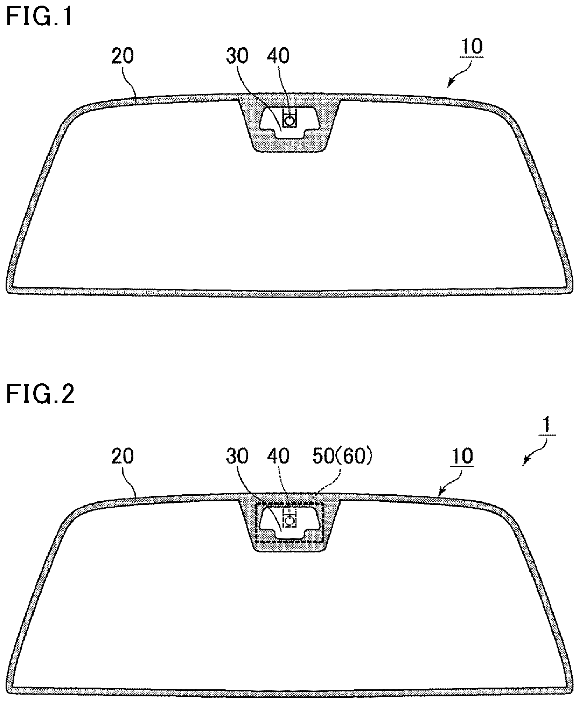

Fig. 1 is a schematic view of an example of a windowpane of a movable body in which an information acquisition device can be arranged in an interior of the movable body.
Fig. 2 is a schematic view of an example of the defogging structure of a windowpane of the disclosure, which includes a defogging sheet in an information acquisition area of the windowpane shown in Fig. 1.

Fig. 1 shows a windowpane 10. A black ceramic layer 20 is provided around the windowpane 10. Fig. 1 is a view of the windowpane 10 seen from an exterior of the movable body.

The black ceramic layer 20 is broadly provided at an upper center of the windowpane 10, and a transparent area without the black ceramic layer 20 is provided at a center of the black ceramic layer 20 that is broadly provided. An information acquisition device 40 is provided on the interior side (the back of the paper) of the transparent area.

The information acquisition device 40 is a device that acquires information from the exterior by at least one of emitting light or receiving light. An area through which at least one of light emitted by the information acquisition device 40 or light to be received by the information acquisition device 40 passes is an information acquisition area 30.

In Fig. 1, the information acquisition area 30 substantially coincides with the area surrounded by the black ceramic layer 20, but the information acquisition area 30 may not necessarily be surrounded by the black ceramic layer 20.

The defogging structure of a windowpane of the disclosure does not essentially include the black ceramic layer as a constituent element. The information acquisition area is defined as the area through which at least one of light emitted by the information acquisition device or light to be received by the information acquisition device passes.

In other words, the information acquisition area does not necessarily coincide with the area surrounded by the black ceramic layer.

Fig. 2 shows a defogging structure 1 of a windowpane, which includes a defogging sheet 50 on the information acquisition area 30 of the windowpane 10 via a transparent resin adhesive layer 60.

In the defogging structure 1 shown in Fig. 2, the defogging sheet 50 is adhered to the entire information acquisition area 30, and is provided across a boundary between the information acquisition area 30 and the black ceramic layer 20.

The transparent resin adhesive layer 60 allows adhesion between the defogging sheet 50 and the windowpane 10.

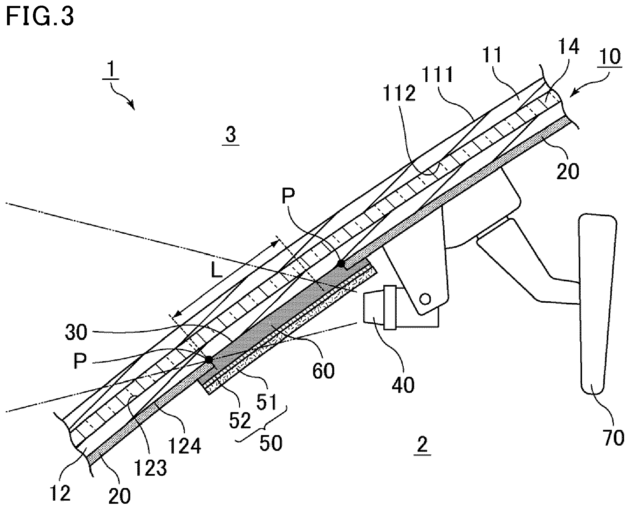

Fig. 3 is a cross-sectional view of the defogging structure of a windowpane shown in Fig. 2.

Fig. 3 shows only the information acquisition area 30 of the windowpane 10 and its surrounding area as a part of the defogging structure 1 of a windowpane.

In Fig. 3, an interior 2 of a movable body is separated from an exterior 3 of the movable body by the windowpane 10.

An example of the movable body shown in Fig. 3 is a passenger car. The interior 2 of the passenger car includes a room mirror 70. A camera as the information acquisition device 40 is provided at a position hidden by the room mirror 70 from a vehicle occupant's view.

The camera is a device that acquires image information from the exterior 3 by receiving the light that passed through the windowpane 10.

In Fig. 3, a shooting range of the camera, i.e., a range that receives light that passed through the windowpane, is indicated by long dashed double-dotted lines. The range between intersections where these long dashed double-dotted lines intersect the interior side of the windowpane, i.e., the range indicated with a double headed arrow L, is the information acquisition area 30.

In this case, the information acquisition area does not coincide with the area surrounded by the black ceramic layer 20. The upper side of the information acquisition area is lower than the upper side of the area surrounded by the black ceramic layer 20.

The defogging sheet 50 is adhered to the information acquisition area 30 via the transparent resin adhesive layer 60.

The defogging sheet 50 includes a resin film 51 and a resistive metal layer 52 as a defogger, and the resistive metal layer 52 is adhered to the windowpane 10 via the transparent resin adhesive layer 60.

The defogging sheet 50 is adhered to the entire information acquisition area 30, and is provided across the boundary between the information acquisition area 30 and the black ceramic layer 20.

At the boundary between the information acquisition area 30 and the black ceramic layer 20, no air is present between the transparent resin adhesive layer 60, the windowpane 10, and the black ceramic layer 20 (at points indicated by dots P in Fig. 3). This means that the transparent resin adhesive layer 60 is adhered in such a manner that the transparent resin adhesive layer 60 fills the step between the windowpane 10 and the black ceramic layer 20.

While Fig. 3 shows an embodiment in which the resistive metal layer 52 of the defogging sheet 50 is adhered to the windowpane 10 via the transparent resin adhesive layer 60, the positional relationship between the resistive metal layer 52 and the resin film 51 may be reversed. In other words, the resin film 51 of the defogging sheet 50 may be adhered to the windowpane 10 via the transparent resin adhesive layer 60.

The following describes details of each component constituting the defogging structure of a windowpane, which is configured as described above.

Examples of the movable body including the defogging structure of a windowpane of the disclosure include motor vehicles (e.g., passenger cars, trucks, and buses), trains, steam locomotives, boats, ships, and airplanes. Preferred of these are passenger cars.

Examples of the type of the windowpane include windshields (front glass) and rear windows (rear glass) of passenger cars. In particular, the defogging structure of the disclosure is preferably applied to the vehicle type in which the windshield is arranged tilted (at a rather acute angle) with respect to the line of sight of a vehicle occupant (typically, a sports car).

The information acquisition device may be positioned behind a room mirror as illustrated in Fig. 3, but the position is not limited thereto.

Examples of the information acquisition device include millimeter-wave radars, cameras, and LiDARs. It may be a device that acquires information from the exterior by receiving light (e.g., a camera) or a device that acquires information from the exterior by emitting light and receiving reflected light (e.g., a millimeter-wave radar or a LiDAR).

Examples of the light emitted from and/or to be received by the information acquisition device include visible light, infrared light, ultraviolet light, and radio waves (e.g., millimeter waves and microwaves).

The term "light" as used herein also includes radio waves.

The defogging structure of the disclosure reduces the impact of fog formation, and is particularly suitable for reliably receiving visible light that is easily affected by fog. Thus, preferably, the information acquisition device is a camera that acquires information from the exterior by receiving visible light.

Preferably, the windowpane is laminated glass.

Specifically, preferably, the windowpane includes an interlayer, a first glass plate to be arranged facing the exterior of the movable body, and a second glass plate to be arranged facing the interior of the movable body, the first glass plate and the second glass plate being opposite to each other with the interlayer therebetween, the first glass plate includes a first main surface to be exposed to the exterior and a second main surface on a side opposite to the first main surface, and the second glass plate includes a fourth main surface to be exposed to the interior and a third main surface on a side opposite to the fourth main surface.

Fig. 3 shows that the windowpane 10 is laminated glass.

Specifically, the windowpane 10 includes an interlayer 14, a first glass plate 11 to be arranged facing the exterior 3 of a movable body, and a second glass plate 12 to be arranged facing the interior 2 of the movable body, the first glass plate 11 and the second glass plate 12 being opposite to each other with the interlayer 14 therebetween.

The first glass plate 11 includes a first main surface 111 to be exposed to the exterior and a second main surface 112 on a side opposite to the first main surface. The second glass plate 12 includes a fourth main surface 124 to be exposed to the interior and a third main surface 123 on a side opposite to the fourth main surface 124.

The materials, thickness, and the like of the first glass plate, the second glass plate, and the interlayer constituting the laminated glass are not limited, but are preferably the same as those of common laminated glass for automobiles.

The windowpane is provided with the information acquisition area through which at least one of light emitted from the information acquisition device or light to be received by the information acquisition device passes. The information acquisition area is an area not provided with a black ceramic layer so as to allow passage of light therethrough. It is an area made of transparent glass with high visible light transmittance.

The information acquisition area is usually arranged in front of the information acquisition device and is defined as the area of the glass plate on the interior side. When the windowpane is laminated glass as shown in Fig. 3, the information acquisition area is defined as the area of the fourth main surface of the second glass plate.

Preferably, the black ceramic layer is provided around the information acquisition area. The black ceramic layer is formed by printing a black ceramic layer print ink on a windowpane and firing the ink. The black ceramic layer is a black or dark opaque layer formed around the windowpane. It prevents ultraviolet light-induced deterioration of a urethane sealant holding the windowpane at a periphery thereof. Conductors such as an electrode for passing a current (i.e., a busbar) are formed to overlap the black ceramic layer, so that a feed point, an antenna wire terminal, and the like attached to the periphery of the windowpane cannot be seen through from the outside of the vehicle. Thus, the black ceramic layer also has an effect that increases the degree of perfection of the appearance design.

Preferably, the black ceramic layer is provided on a windowpane surface facing the interior. When the windowpane is laminated glass as shown in Fig. 3, preferably, the black ceramic layer is provided on the fourth main surface of the second glass plate.

Preferably, the black ceramic layer has a thickness of 50 µm or less. When the thickness of the black ceramic layer is in this range, making the thickness of the transparent resin adhesive layer greater than the thickness of the black ceramic layer makes it possible for the transparent resin adhesive layer to attach the defogging sheet while reducing the impact of the step corresponding to the thickness of the black ceramic layer.

The black ceramic layer may be provided on the second main surface of the first glass plate. When providing the black ceramic layer on the second main surface of the first glass plate, preferably, the width of the black ceramic layer to be provided on the second main surface is made greater than the width of the black ceramic layer to be provided on the fourth main surface.

The term "the width of the black ceramic layer" as used herein means the width starting from the periphery of the glass plate.

An increase in the width of the black ceramic layer to be provided on the second main surface can make bubbles (air) or distortion invisible from the outside of the vehicle even if such bubbles are present between the transparent resin adhesive layer, the windowpane, and the black ceramic layer or even if such distortion is generated at the boundary between the transparent resin adhesive layer and the black ceramic layer.

However, an increase in the width of the black ceramic layer to be provided on the second main surface results in a reduction in the information acquisition area. Thus, preferably, the width of the black ceramic layer is not increased more than necessary.

The defogging sheet is a sheet adhered to the information acquisition area of the windowpane via the transparent resin adhesive layer. The defogging sheet has a function to prevent fog in the interior of a movable body.

The defogging sheet includes a resin film and a defogger.

Preferably, the resin film constituting the defogging sheet is a resin film having a Tg of 50°C to 150°C and a tension modulus of 2.0 × 10⁹ Pa to 5.0 × 10⁹ Pa.

The Tg of the resin film is a value determined by heat-flux DSC in accordance with JIS K 7121:2012.

The tension modulus of the resin film is a value determined at 20°C in accordance with JIS K 7127:1999.

Examples of the resin film include PET films, PEN films, and PC films.

Preferably, the resin film has a thickness of 50 to 150 µm.

The defogging sheet for use in the defogging structure of the disclosure can be attached to the windowpane without heating. Thus, a resin film having low heat resistance can be used. A resin film having low stiffness (soft and highly deformable) can also be used.

Resin film having a Tg in the above range include a resin film having low heat resistance.

A resin film having a tension modulus and a thickness in the above ranges is a resin film having low stiffness. Use of a resin film having low stiffness is preferred because it allows the defogging sheet to be attached while conforming to the step corresponding to the thickness of the black ceramic layer.

The defogger may be a resistive metal layer. In this case, the defogging sheet is a structure including a resistive metal layer on the resin film, and the defogging sheet prevents fog on the windowpane as the resistive metal layer generates heat upon passage of an electric current therethrough.

The resistive metal layer may be a layer including at least one conductive material selected from the group consisting of silver (Ag), indium tin oxide (ITO), tin oxide (SnO₂), zinc oxide (ZnO), and a metal nanowire.

A preferred metal nanowire contains silver or a noble metal other than silver (e.g., gold, platinum, silver, palladium, rhodium, iridium, ruthenium, or osmium).

Specifically, the defogging sheet is preferably a structure including a silver layer (Ag layer) on the entire PET film. Preferably, the silver layer is provided on the resin film by sputtering.

A protective film made of a material different from the resistive metal layer and the resin film may be provided on a surface of the resistive metal layer and/or between the resistive metal layer and the resin film.

When the defogging sheet is a structure including a resistive metal layer on the resin film, the resistive metal layer quickly generates heat at the surface and rapidly warms the windowpane surface, thus providing high defogging responsiveness. This also provides a long lasting defogging function.

Preferably, the resistive metal layer has a thickness of 50 to 100 nm based on the relationship between conductivity and transparency of the resistive metal layer.

Another example of the defogger may be a water absorption layer. In this case, the defogging sheet is a structure including a water absorption layer on the resin film, and the defogging sheet prevents fog on the windowpane as the water absorption layer absorbs moisture that causes fog.

Preferably, the water absorption layer is made of a water absorbent resin. The water absorbent resin that can be used is at least one resin selected from the group consisting of a urethane resin, an epoxy resin, an acrylic resin, a polyvinyl acetal resin, and a polyvinyl alcohol resin.

Preferably, the defogging sheet is adhered to the windowpane surface facing the interior of the movable body.

When the windowpane is laminated glass as shown in Fig. 3, preferably, the defogging sheet is adhered to the fourth main surface of the second glass plate via the transparent resin adhesive layer.

When the defogger is a resistive metal layer, the defogging sheet can be provided on the interlayer between the first glass plate and the second glass plate. It is possible to clear fog on the windowpane by generating heat in the resistive metal layer at the interlayer. However, in this case, it takes time for heat to transfer from the interlayer to the fourth main surface of the second glass plate, disadvantageously resulting in poor defogging responsiveness. Thus, it is preferred to provide the defogging sheet including the resistive metal layer on the fourth main surface of the second glass plate in terms of defogging responsiveness.

In addition, in the case where the defogger is a water absorption layer, the defogging sheet is provided on the windowpane surface facing the interior of the movable body (in the case of a laminated glass, the defogging sheet is provided on the fourth main surface of the second glass plate) in order to absorb moisture in the interior of the movable body.

The transparent resin adhesive layer allows the resistive metal layer or the resin film of the defogging sheet to be adhered to the windowpane in the information acquisition area of the windowpane.

The transparent resin adhesive layer contains a resin, and the resin constituting the transparent resin adhesive layer has a Tg of -20°C to -50°C and a shear storage modulus of 0.5 × 10⁵ Pa to 2.0 × 10⁵ Pa.

The Tg of the resin constituting the transparent resin adhesive layer is a value determined by heat-flux DSC in accordance with JIS K 7121:2012.

The shear storage modulus of the resin constituting the transparent resin adhesive layer is a value determined at 20°C in accordance with JIS K 7244-6:1999.

The transparent resin adhesive layer that can be used is an optical adhesive sheet that is commercially available as an optical clear adhesive (OCA) film and that contains a resin that satisfies the above requirements of Tg and shear storage modulus.

The resin constituting the transparent resin adhesive layer that can be used is, for example, an acrylic adhesive, a urethane adhesive, a silicone adhesive, a rubber adhesive, or the like. In particular, use of an acrylic adhesive is preferred.

Preferably, the acrylic adhesive contains a (meth)acrylic copolymer consisting of (meth)acrylic monomers. Preferably, the acrylic adhesive contains a functional group (crosslinkable group) that can crosslink a (meth)acrylic copolymer. Examples of the crosslinkable group include hydroxy, carboxy, epoxy, and amide groups.

The (meth)acrylic monomer is preferably an alkyl acrylate whose alkyl moiety has 1 to 10 carbon atoms (e.g., ethyl acrylate, butyl acrylate, or 2-ethylhexyl acrylate).

The resin constituting the transparent resin adhesive layer may contain an additive (e.g., a crosslinking agent, a stabilizer, a frame retardant, or a tackifier) and the like. The crosslinking agent that can be used is an isocyanate crosslinking agent, an epoxy crosslinking agent, or the like.

The thickness of the transparent resin adhesive layer is not limited, but is preferably 5 to 250 µm. When providing the transparent resin adhesive layer across the boundary between the information acquisition area and the black ceramic layer, preferably, the transparent resin adhesive layer is thicker than the black ceramic layer. The thickness of the transparent resin adhesive layer is preferably 100 µm or more.

When the transparent resin adhesive layer is thicker than the black ceramic layer, the step due to the thickness of the black ceramic layer has less impact, thus improving adhesion of the defogging sheet to the information acquisition area. In particular, when the transparent resin adhesive layer has a thickness of 100 µm or more, the step due to the thickness of the black ceramic layer has even less impact, thus improving adhesion of the defogging sheet to the information acquisition area.

Preferably, no air is present between the transparent resin adhesive layer, the windowpane, and the black ceramic layer at the boundary between the information acquisition area and the black ceramic layer. When the transparent resin adhesive layer is adhered in such a manner that it fills the step between the windowpane and the black ceramic layer, the information acquisition area has better transparency.

The thickness of the transparent resin adhesive layer is defined as the thickness of a portion that will be the information acquisition area. The thickness of a portion of the transparent resin adhesive layer overlapping the black ceramic layer is not defined as the thickness of the transparent resin adhesive layer.

The following describes a method of producing the defogging structure of a windowpane of the disclosure.

A windowpane is provided, and the information acquisition area is delimited on the windowpane based on the position where the information acquisition device is intended to be arranged.

A black ceramic layer is formed around the windowpane and the information acquisition area, as needed.

A defogging sheet including a resin film and a defogger is prepared. Further, an adhesive film including a transparent resin adhesive layer is prepared. Preferably, the adhesive film is one in which a transparent resin adhesive layer is sandwiched between release films.

Then, one of the release films of the adhesive film is peeled off to expose the transparent resin adhesive layer, and the transparent resin adhesive layer is attached to the defogger or the resin film of the defogging sheet, thus producing a composite film including the defogging sheet and the transparent resin adhesive layer overlapping each other.

Subsequently, the composite film is cut to a size that covers the information acquisition area of the windowpane, and the release film remaining on a surface of the transparent resin adhesive layer is peeled off to expose the transparent resin adhesive layer. The composite film is attached to the windowpane so as to cover the information acquisition area of the windowpane.

Preferably, a laminate roller is used to attach the composite film.

The above steps can provide the defogging structure of a windowpane of the disclosure in which the defogging sheet is adhered to the information acquisition area of the windowpane via the transparent resin adhesive layer.

Adhesion of the defogging sheet in the above step can be performed at room temperature.

Unlike the case where a COP is used as an adhesive, adhesion requires no heating, which prevents wrinkle formation in the resin film constituting the defogging sheet.

Thus, it is possible to provide a defogging structure of a windowpane, which provides excellent transparency in the information acquisition area.

### EXAMPLES

### (Example 1)

A windowpane including a black ceramic layer having a pattern as shown in Fig. 1 was prepared. The windowpane was laminated glass, and the black ceramic layer was provided on a fourth main surface of a second glass plate intended to be arranged facing the interior. The black ceramic layer had a thickness of 5 to 40 µm.

A Ag-stacked film (available from TDK Corporation) was provided as a defogging sheet including a resin film and a defogger.

The resin film was a PET film (thickness: 125 µm; Tg: 70°C; and tension modulus: 4.0 × 10⁹ Pa). As a defogger, a silver layer (thickness: 70 nm) was formed on the resin film by sputtering.

The tension modulus of the resin film is a value determined at 20°C in accordance with JIS K 7127:1999.

An OCA film (available from Nitto Denko Corporation) including a transparent resin adhesive layer was also provided as an adhesive film. This adhesive film included release films on both sides of the transparent resin adhesive layer.

Properties of the transparent resin adhesive layer were as follows: thickness: 150 µm; Tg of resin: -35°C; and shear storage modulus of resin: 1.4 × 10⁵ Pa.

The Tg of the resin is a value determined by heat-flux DSC in accordance with JIS K 7121:2012.

The shear storage modulus of the resin is a value determined at 20°C in accordance with JIS K 7244-6:1999.

One of the release films of the OCA film was peeled off to expose the transparent resin adhesive layer, and the transparent resin adhesive layer was attached to the silver layer of the Ag-stacked film, whereby a composite film was obtained.

This composite film was cut to a size that can cover the information acquisition area 30 surrounded by the black ceramic layer 20 of the windowpane shown in Fig. 1 and that can straddle a boundary between the information acquisition area 30 and the black ceramic layer 20.

Subsequently, the other release film of the OCA film of the composite film was peeled off to expose the transparent resin adhesive layer. The transparent resin adhesive layer was attached to the windowpane so as to cover the information acquisition area 30 surrounded by the black ceramic layer 20 shown in Fig. 1 and straddle the boundary between the information acquisition area 30 and the black ceramic layer 20.

A laminate roller was used to attach the composite film at room temperature (20°C).

### (Comparative Example 1)

A COP film (thickness: 50 µm; Tg of resin: 140°C; and shear storage modulus of resin: 3.0 × 10⁸ Pa) was prepared instead of the OCA film used in Example 1.

A windowpane, the COP film, and a Ag-stacked film were stacked in this order, with the silver layer of the Ag-stacked film on the COP film. The stack was heated at 150°C under pressure, whereby the windowpane and the Ag-stacked film were adhered to each other.

### (Comparative Example 2)

An acrylic liquid adhesive was provided as an adhesive instead of the OCA film used in Example 1. The liquid adhesive was applied to the silver layer of the Ag-stacked film. The surface coated with the liquid adhesive was adhered to the windowpane in an overlapping manner using a laminate roller.

Properties of the acrylic liquid adhesive used were as follows: Tg of resin: -40°C; and shear storage modulus of resin: 3.0 × 10³ Pa.

### (Observation of appearance)

The transparency of the Ag-stacked film as a defogging sheet adhered to the windowpane in each of Example 1 and Comparative Examples 1 and 2 was visually observed.

In Comparative Example 1, while the Ag-stacked film looked transparent when observed from the front, streaks were visible when the angle of the windowpane was tilted with respect to the line of sight.

In Comparative Example 2, the appearance was poor particularly when observed from an angle due to irregularities resulting from the uneven film thickness.

In Example 1, a transparent adhesion state was achieved with no visible streaks from any angle.

The observations also found that in Example 1, no air was present at the boundary between the information acquisition area (the fourth main surface of the windowpane) and the black ceramic layer, and the step due to the thickness of the black ceramic layer had less impact, resulting in good adhesion.

### INDUSTRIAL APPLICABILITY

The disclosure can provide a defogging structure of a windowpane. The defogging structure can prevent fog on a windowpane in the information acquisition area in front of the information acquisition device such as a camera, has high responsiveness to fog formation, and provides excellent transparency in the information acquisition area.

### REFERENCE SIGNS LIST

- 1: defogging structure of windowpane
- 2: interior of movable body
- 3: exterior of movable body
- 10: windowpane
- 11: first glass plate
- 12: second glass plate
- 14: interlayer
- 20: black ceramic layer
- 30: information acquisition area
- 40: information acquisition device (camera)
- 50: defogging sheet
- 51: resin film
- 52: resistive metal layer
- 60: transparent resin adhesive layer
- 70: room mirror
- 111: first main surface
- 112: second main surface
- 123: third main surface
- 124: fourth main surface

## Claims

1. A defogging structure of a windowpane of a movable body in which an information acquisition device configured to acquire information from an exterior of the movable body by at least one of emitting light or receiving light can be arranged in an interior of the movable body, the defogging structure comprising:
a windowpane having an information acquisition area through which at least one of light emitted by the information acquisition device or light to be received by the information acquisition device passes;
a defogging sheet including a resin film and a defogger, the defogging sheet being adhered to the information acquisition area of the windowpane; and
a transparent resin adhesive layer that allows the resin film of the defogging sheet to be adhered to the windowpane,
wherein a resin constituting the transparent resin adhesive layer has a Tg of -20°C to -50°C, and a shear storage modulus of 0.5 × 10⁵ Pa to 2.0 × 10⁵ Pa.

2. The defogging structure according to claim 1,
wherein the windowpane comprises an interlayer, a first glass plate to be arranged facing the exterior of the movable body, and a second glass plate to be arranged facing the interior of the movable body, the first glass plate and the second glass plate being opposite to each other with the interlayer therebetween,
the first glass plate comprises a first main surface to be exposed to the exterior and a second main surface on a side opposite to the first main surface,
the second glass plate comprises a fourth main surface to be exposed to the interior and a third main surface on a side opposite to the fourth main surface, and
the defogging structure is a structure including the defogging sheet adhered to the fourth main surface of the second glass plate via the transparent resin adhesive layer.

3. The defogging structure according to claim 1 or 2,
wherein the defogging structure comprises a black ceramic layer around the information acquisition area, the transparent resin adhesive layer is provided across a boundary between the information acquisition area and the black ceramic layer, and the transparent resin adhesive layer has a thickness of 100 µm or more.

4. The defogging structure according to claim 3,
wherein no air is present between the transparent resin adhesive layer, the windowpane, and the black ceramic layer at the boundary between the information acquisition area and the black ceramic layer.

5. The defogging structure according to any one of claims 1 to 4,
wherein the resin film has a Tg of 50°C to 150°C and a tension modulus of 2.0 × 10⁹ Pa to 5.0 × 10⁹ Pa.

6. The defogging structure according to claim 5,
wherein the resin film has a thickness of 50 to 150 µm.

7. The defogging structure according to any one of claims 1 to 6,
wherein the defogging sheet is a structure including a resistive metal layer on the resin film, and the defogging sheet prevents fog on the windowpane as the resistive metal layer generates heat upon passage of an electric current therethrough.

8. The defogging structure according to claim 7,
wherein the defogging sheet is a structure including a silver layer on an entire surface of a PET film.

9. The defogging structure according to any one of claims 1 to 6,
wherein the defogging sheet is a structure including a water absorption layer on the resin film, and the defogging sheet prevents fog on the windowpane as the water absorption layer absorbs moisture that causes fog.
